# EUROPÄISCHE PATENTSCHRIFT

(11) **EP 2 284 117 B1**
(45) Veröffentlichungstag und Bekanntmachung des Hinweises auf die Patenterteilung: **05.09.2012**
(21) Anmeldenummer: 10007891.4
(22) Anmeldetag: 29.07.2010
(51) Int. Cl.: B66F 9/075, B60K 7/00, B62D 7/02

(54) **Lagerbauteil zur Lagerung einer Antriebs- und Lenkeinheit eines Flurförderzeugs**
Bearing component of a bearing for a drive and steering unit of an industrial truck
Composant de palier pour le stockage d'une unité d'entraînement et de direction d'un chariot de manutention

(30) Priorität: 14.08.2009 DE 102009038654
(43) Veröffentlichungstag der Anmeldung: 16.02.2011
(73) Patentinhaber: Jungheinrich Aktiengesellschaft, 22047 Hamburg (DE)
(72) Erfinder: Lohmann, Helmut, 27404 Nartum-Gyhum (DE); Röder, Matthias, 22523 Hamburg (DE); Schipper, Ulf, 24558 Henstedt-Ulzburg (DE)
(74) Vertreter: Hauck Patent- und Rechtsanwälte

(56) Entgegenhaltungen:
- EP-A1- 2 030 939
- EP-A2- 1 772 348
- DE-A1- 10 320 142
- DE-A1-102004 005 869
- DE-U1- 8 124 384
- DE-U1- 20 221 136

## Beschreibung

Die Erfindung betrifft ein Lagerbauteil zur Lagerung einer Antriebs- und Lenkeinheit eines Flurförderzeugs, eine Antriebs- und Lenkeinheit mit einem solchen Lagerbauteil sowie ein Flurförderzeug mit einer derartigen Antriebs- und Lenkeinheit.

Das Flurförderzeug ist insbesondere ein deichselgeführtes Flurförderzeug mit einem elektrischen Fahrantrieb. Derartige Flurförderzeuge weisen eine Antriebs- und Lenkeinheit mit einem einzigen Antriebsrad auf, das um eine horizontale Achse drehbar gelagert ist, beispielsweise in einem Schemel. Die Antriebs- und Lenkeinheit hat einen Elektromotor, der über ein Getriebe das Antriebsrad antreibt. Die gesamte Antriebs- und Lenkeinheit ist um eine vertikale Achse schwenkbar in dem Flurförderzeug gelagert, um eine Lenkbewegung ausführen zu können.

Bei einfachen Flurförderzeugen dieser Bauart wird die Antriebs- und Lenkeinheit manuell durch Bewegen einer fest mit der Antriebs- und Lenkeinheit verbundenen Deichsel gelenkt. Um das Ausführen von Lenkbewegungen zu vereinfachen, ist auch ein Lenkantrieb bekannt, der die Winkelstellung der Antriebseinheit nach Maßgabe einer von einem Sensor erfassten Deichselstellung einstellt. Die Deichsel ist dann unabhängig von der Antriebseinheit schwenkbar gelagert. Der Lenkantrieb kann beispielsweise ein Elektromotor sein, der ein Ritzel aufweist und auf ein konzentrisch an der Antriebseinheit angeordnetes Zahnrad oder einen Zahnriemen einwirkt.

Aus der Druckschrift EP 1 772 348 A2 ist eine besonders kompakte Anordnung eines deichselgeführten Flurförderzeugs bekannt geworden, bei der ein mit der Deichsel verbundener Deichselbock konzentrisch zur Antriebseinheit angeordnet ist. Ein Sensor erfasst die relative Winkelstellung zwischen Deichselbock und Antriebseinheit, und eine Regeleinrichtung verstellt die Drehstellung der Antriebseinheit mit Hilfe eines Lenkantriebs derart, dass die relative Winkelstellung einen vorgegebenen Wert einnimmt, bei dem die Richtung der Deichsel und die von der Drehstellung des Antriebsrads vorgegebene Fahrtrichtung übereinstimmen. Die aus der genannten Druckschrift bekannte Anordnung ist in den Figuren 8 und 9 gezeigt. Wie in der Fig. 9 dargestellt ist, gibt es zur Lagerung der Antriebseinheit, die einen Elektromotor 10 und ein Antriebsrad 12 aufweist, ein erstes Kugellager 14, dessen Innenring 16 mit der Antriebseinheit verbunden ist und dessen Außenring 18 mit Hilfe von Schrauben 20 an einer Rahmenplatte 22 des Flurförderzeugs befestigt ist.

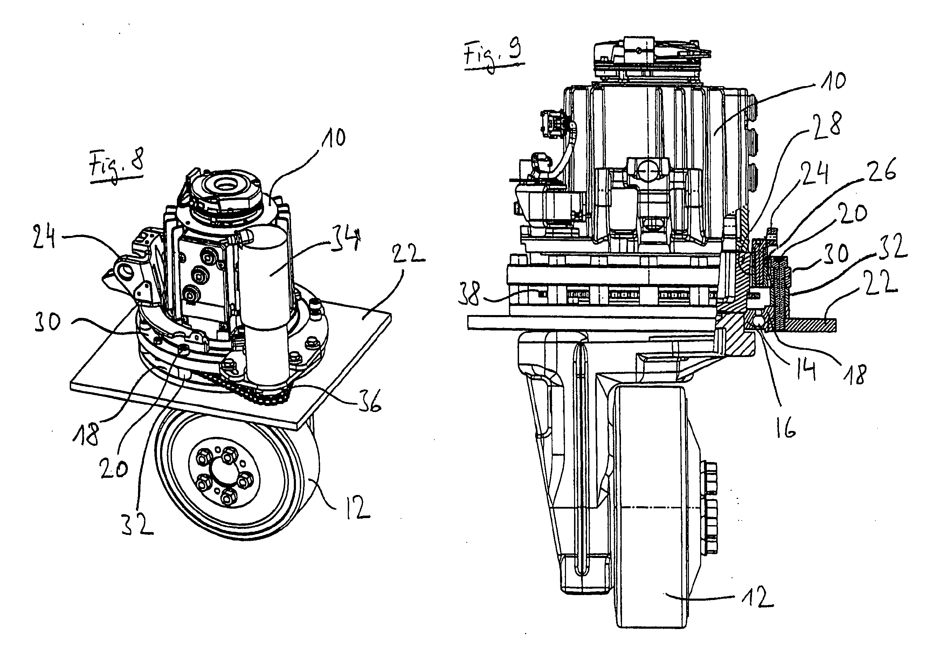

Um die Drehbewegung der Deichsel von der Drehbewegung der Antriebseinheit zu entkoppeln, ist der Deichselbock 24, an dem die Deichsel befestigt wird, mit Hilfe eines zweiten Lagers 26 schwenkbar um die gleiche vertikale Achse gelagert, wie die Antriebseinheit. Das zweite Lager 26 weist einen Innenring 28 auf, der mit dem Deichselbock 24 verschraubt ist, und einen Außenring 30, der über Abstandshalter 32 mit der Rahmenplatte 22 verschraubt ist. In der perspektivischen Ansicht der Fig. 8 sind die beschriebenen Komponenten mit denselben Bezugzeichen versehen. In dieser Ansicht gut erkennbar ist auch der Lenkantrieb 34, der über eine Kette 36 auf ein Zahnrad 38 an der Antriebseinheit einwirkt.

Davon ausgehend ist es die Aufgabe der Erfindung, eine verbesserte Lagerung einer Antriebs- und Lenkeinheit eines Flurförderzeugs zur Verfügung zu stellen, die einfacher zu fertigen und zu montieren ist und einen kompakteren Aufbau ermöglicht.

Diese Aufgabe wird gelöst durch das Lagerbauteil mit den Merkmalen des Anspruchs 1. Vorteilhafte Ausgestaltungen sind in den sich anschließenden Unteransprüchen angegeben.

Das erfindungsgemäße Lagerbauteil dient zur Lagerung einer Antriebs- und Lenkeinheit eines Flurförderzeugs und hat
- einen ringförmigen Körper und
- eine Befestigungseinrichtung zur Befestigung des ringförmigen Körpers an einem Rahmen des Flurförderzeugs, wobei
- das Lagerbauteil einteilig aus einem einzigen Rohteil hergestellt ist,
- der ringförmige Körper einen ersten ringförmigen Abschnitt mit einem ersten Lagerbett zur Aufnahme einer schwenkbar zu lagernden Antriebseinheit und
- einen zweiten ringförmigen Abschnitt aufweist, der sich über eine Höhe in Richtung seiner Symmetrieachse erstreckt und ein zweites Lagerbett zur Aufnahme einer schwenkbar zu lagernden Lenkeinrichtung aufweist oder mit einem solchen ausrüstbar ist.

Die Antriebs- und Lenkeinheit des Flurförderzeugs kann in den ringförmigen Körper eingesetzt werden, so dass der ringförmige Körper die Antriebs- und Lenkeinheit umgibt. Der ringförmige Körper umschließt also eine Öffnung, in die die Antriebs-und Lenkeinheit oder ein Teil davon einsetzbar ist. Die Antriebs- und Lenkeinheit kann den ringförmigen Körper auch teilweise umgreifen.

Abgesehen von den Lagerbetten ist der ringförmige Körper nicht notwendigerweise rotationssymmetrisch. Insbesondere an seiner Außenseite kann der ringförmige Körper eine recht- oder vieleckige Grundform aufweisen, wobei die Ecken mehr oder weniger stark abgerundet sein können.

Mit Hilfe der Befestigungseinrichtung wird der ringförmige Körper an einem Rahmen des Flurförderzeugs befestigt. Zu diesem Zweck kann das Lagerbauteil insbesondere mit der bereits darin gelagerten Antriebs- und Lenkeinheit vorzugsweise von oben in das Flurförderzeug eingesetzt werden, wobei ein Antriebsrad der Antriebs- und Lenkeinheit durch eine Öffnung im Rahmen des Flurförderzeugs nach unten hindurch geführt wird. Die Befestigungseinrichtung weist definierte Befestigungsflächen auf, die, bevorzugt von oben, an ein rahmenfestes Element des Flurförderzeugs, insbesondere an den Rahmen oder an eine Rahmenplatte des Flurförderzeugs selbst, angesetzt werden. Zur Fixierung des Lagerbauteils wird die Befestigungseinrichtung beispielsweise durch Schrauben fest mit dem Rahmen des Flurförderzeugs verbunden.

Das einzige Rohteil, aus dem das Lagerbauteil einteilig hergestellt ist, kann insbesondere ein Gussrohteil oder ein Schmiederohling sein, beispielsweise aus Aluminium oder Stahl.

Das erste Lagerbett dient zur Aufnahme einer schwenkbar zu lagernden Antriebseinheit. Es kann insbesondere ein Teil des hierzu eingesetzten Lagers selbst sein oder mit einem solchen Lagerbauteil verbunden werden. Das erste Lagerbett befindet sich in oder an einem ersten ringförmigen Abschnitt des ringförmigen Körpers. Das zugehörige Lager wird im Folgenden auch als Antriebslager bezeichnet.

Ein zweiter ringförmiger Abschnitt des ringförmigen Körpers erstreckt sich über eine Höhe in Richtung seiner Symmetrieachse und weist ein zweites Lagerbett auf oder ist mit einem solchen ausrüstbar. Das zweite Lagerbett kann zur Aufnahme einer schwenkbar zu lagernden Lenkeinrichtung verwendet werden. Die Lenkeinrichtung kann beispielsweise ein Deichselbock sein, an dem eine Deichsel befestigt werden kann. Ausrüstbar bedeutet, dass der zweite ringförmige Abschnitt mit einem zweiten Lagerbett ausgestattet werden kann, beispielsweise durch Verbindung mit einem Lauf- oder Gleitring oder durch Ausformen des zweiten ringförmigen Abschnitts als Teil des Lagers, beispielsweise durch Fräsen oder Drehen einer Lauffläche in den zweiten ringförmigen Abschnitt oder durch Ausbilden einer Gleitfläche. Der zweite ringförmige Abschnitt ist zur Ausbildung eines derartigen Lagerbetts vorbereitet, d.h. er weist zumindest hierfür geeignete Abmessungen und die erforderliche mechanische Belastbarkeit auf.

Der erste ringförmige Abschnitt und der zweite ringförmige Abschnitt können von zwei Längsabschnitten des ringförmigen Körpers gebildet werden. Sie können durch eine oder mehrere Stufen voneinander getrennt sein oder unmittelbar ineinander übergehen. Alternativ können der erste ringförmige Abschnitt und der zweite ringförmige Abschnitt auch bezogen auf die Längsrichtung des ringförmigen Körpers auf gleicher Höhe angeordnet sein, beispielsweise kann der erste ringförmige Abschnitt an der Innenseite des ringförmigen Körpers und der zweite ringförmige Abschnitt an der Außenseite des ringförmigen Körpers vorgesehen sein.

In einer Ausgestaltung weist die Befestigungseinrichtung mindestens eine Anlagefläche auf, die in der vorgesehenen Einbauposition des Lagerbauteils an einem rahmenfesten Element des Flurförderzeugs anliegt. Diese Anlagefläche ist in einem in Richtung der Symmetrieachse des ersten Lagerbetts verlaufenden Abstand von dem ersten Lagerbett angeordnet. Durch diese Ausgestaltung kann die Höhe des Antriebslagers unabhängig von der Höhe des Rahmens des Flurförderzeugs gewählt werden. Ein besonderer Vorteil ist, dass zwischen dem Rahmen des Flurförderzeugs und dem ersten Lagerbett bzw. dem Antriebslager ein Freiraum verbleibt, in dem ein Zahn-, Ketten- oder Riemenrad, das mit der Antriebseinheit verbunden ist und von einem Lenkantrieb angetrieben wird, angeordnet werden kann. Dabei kann der Durchmesser des Zahn-, Ketten- oder Riemenrads unabhängig vom Durchmesser des ersten Lagerbetts und insbesondere größer als dieser gewählt werden. Hierzu kann die Befestigungseinrichtung ohne weiteres in einem größeren radialen Abstand von der Symmetrieachse des ersten Lagerbetts angeordnet werden, um einen entsprechend großen Freiraum für das Zahn- oder Riemenrad auszubilden. Beispielsweise kann die Befestigungseinrichtung radial nach außen greifende Arme aufweisen. Ein möglichst großer Durchmesser des Zahn-, Ketten- oder Riemenrads an der Antriebseinheit begünstigt ein großes Übersetzungsverhältnis gegenüber einem Ritzel eines Lenkantriebs und somit einen spielarmen, präzisen und kraftvollen Verstellmechanismus. Gegebenenfalls können durch Wahl eines großen Durchmessers des Zahn-, Ketten- oder Riemenrads weitere Übersetzungsstufen im Lenkantrieb eingespart werden.

In einer Ausgestaltung sind der erste ringförmige Abschnitt und der zweite ringförmige Abschnitt in Richtung der Symmetrieachse des ersten ringförmigen Abschnitts versetzt angeordnet. Beispielsweise kann der zweite ringförmige Abschnitt in einer Einbauposition des Lagerbauteils oberhalb des ersten Lagerbetts angeordnet sein. Diese Anordnung ermöglicht einen besonders kompakten Aufbau des Lagerbauteils, insbesondere in Radialrichtung.

In einer Ausgestaltung weist das erste Lagerbett eine Gleitfläche oder eine Wälzkörper-Lauffläche zur Lagerung der Antriebseinheit und/oder das zweite Lagerbett eine Gleitfläche oder eine Wälzkörper-Lauffläche zur Lagerung der Lenkeinrichtung auf. In dieser Ausgestaltung bilden die Lagerbetten einen Teil des jeweiligen Lagers, in dem sie als Laufflächen oder -bahnen beispielsweise für Kugeln oder Rollen eines Wälzlagers ausgeformt sind, bzw. als Gleitflächen, an denen ein korrespondierendes Gegenstück eines Gleitlagers entlang gleitet. Die Laufflächen können beispielsweise durch Fräsen in das Rohteil, aus dem das Lagerbauteil hergestellt ist, eingearbeitet sein.

In einer Ausgestaltung weist das erste Lagerbett und/oder das zweite Lagerbett eine Aufnahme für einen Laufring auf. Der Laufring bildet einen Teil des Lagers. Er kann beispielsweise eine Passung aufweisen und in die Aufnahme eingepresst werden. Bevorzugt handelt es sich um einen dünnen, d.h. nicht tragenden Laufring. Ein solcher Laufring erhält seine für die Lagerung erforderliche Stabilität erst durch das umgebende Lagerbett des erfindungsgemäßen Lagerbauteils. Der dünne Laufring selbst hat keine tragende Funktion. Er stellt lediglich eine Lauffläche für das Lager zur Verfügung. Die Lauffläche kann beispielsweise eine Laufbahn für die Wälzkörper eines Wälzlagers oder alternativ eine Gleitfläche sein. Das Einsetzen eines Laufrings bietet die Möglichkeit, für die hoch belasteten Lagerflächen ein anderes, insbesondere speziell gehärtetes Material als für das Lagerbauteil zu wählen.

Gemäß einer Ausgestaltung bilden das erste Lagerbett und/oder das zweite Lagerbett jeweils einen Außenring des zugehörigen Lagers oder nehmen einen solchen Außenring auf. Sofern der Außenring von dem jeweiligen Lagerbett aufgenommen wird, kann es sich bevorzugt um einen dünnen Außenring handeln, der keine tragende Funktion hat, sondern lediglich eine Lauf- oder Gleitfläche zur Verfügung stellt. In dieser Ausgestaltung ist vorgesehen, dass der oder die zugehörigen Innenringe der jeweiligen Lager an der Antriebs- bzw. an der Lenkeinheit angeordnet sind. Es ergibt sich ein besonders kompakter Aufbau.

Gemäß einer Ausgestaltung weist das Lagerbauteil eine Befestigungseinrichtung für einen Lenkantrieb auf. Bei dem Lenkantrieb kann es sich beispielsweise um einen Elektromotor oder einen hydraulischen Antrieb handeln. Die Befestigungseinrichtung stellt beispielsweise geeignete Schraubanschlüsse zur Verfügung, an denen der Lenkantrieb befestigt werden kann. Insbesondere ist vorgesehen, die Befestigungseinrichtung für den Lenkantrieb zumindest teilweise bereits bei der Ausformung des Rohteils, aus dem das Lagerbauteil hergestellt wird, auszubilden. Die Befestigungseinrichtung kann dann abhängig vom vorgesehenen Einsatzzweck des Lagerbauteils weiter ausgeformt werden, beispielsweise durch weitere mechanische Bearbeitung der angeformten Befestigungseinrichtung durch Fräsen und/oder Bohren. Diese weiteren Bearbeitungsschritte können einem Lagerbauteil vorbehalten werden, das tatsächlich zur Ausrüstung mit einem Lenkantrieb bestimmt ist, während die angeformte Befestigungseinrichtung nicht weiter bearbeitet werden muss, wenn das Lagerbauteil zur Verwendung in einem Flurförderzeug ohne Lenkantrieb bestimmt ist.

In einer Ausgestaltung ist der zweite ringförmige Abschnitt konzentrisch zu dem ersten Lagerbett angeordnet. Grundsätzlich können die beiden ringförmigen Abschnitte bzw. die beiden Lagerbetten auch mit parallel verlaufenden Symmetrieachsen, d.h. seitlich versetzt, angeordnet sein, oder mit gegeneinander geneigten Symmetrieachsen, etwa zur Einstellung eines Radsturzes. Insbesondere ist es denkbar, den Durchmesser des zweiten Lagerbetts zur Aufnahme der Lenkeinrichtung größer zu wählen, als den Durchmesser des ersten Lagerbetts, und das erste Lagerbett innerhalb des zweiten Lagerbetts seitlich versetzt anzuordnen. Dadurch kann unter Umständen innerhalb des zweiten Lagerbetts ein Freiraum ausgebildet werden, der z.B. zur Aufnahme eines Sensors für die Lenkwinkelerfassung dienen kann. Bei einer konzentrischen Anordnung ergibt sich jedoch in der Regel ein besonders kompakter Aufbau. Auch die Fertigung kann sich durch die konzentrische Anordnung vereinfachen.

Die oben genannte Aufgabe wird ebenfalls gelöst durch die Antriebs- und Lenkeinheit für ein Flurförderzeug mit den Merkmalen des Anspruchs 9. Vorteilhafte Ausgestaltungen sind in den sich anschließenden Unteransprüchen angegeben.

Die erfindungsgemäße Antriebs- und Lenkeinheit hat eine Antriebseinheit, die ein Antriebsrad und einen Antriebsmotor umfasst, und ein Lagerbauteil der vorstehend beschriebenen Art. Die Antriebseinheit weist ein Lagerbett auf, das mit dem ersten Lagerbett des Lagerbauteils zusammenwirkt. Das Lagerbett an der Antriebseinheit kann insbesondere ein Innenring mit einer Lauffläche sein oder einen solchen aufnehmen. Die Antriebseinheit kann weiterhin ein Getriebe aufweisen, über das der Antriebsmotor das Antriebsrad antreibt.

Gemäß einer Ausgestaltung ist eine Lenkeinrichtung vorhanden, mit der die Antriebseinheit schwenkbar ist, und die ein Lagerbett aufweist, das mit dem zweiten Lagerbett des Lagerbauteils zusammenwirkt. Das zweite Lagerbett kann wiederum beispielsweise ein Innenring mit einer Lauf- oder Gleitfläche sein oder einen solchen aufnehmen.

In einer weiteren Ausgestaltung ist ein Lenkantrieb vorhanden, der auf die Antriebseinheit wirkt und die Drehstellung der Antriebseinheit nach Maßgabe der Drehstellung der Lenkeinrichtung steuert. Bei der Lenkeinrichtung kann es sich insbesondere um einen Deichselbock handeln, der mit einer Deichsel verbunden wird. Es ist jedoch auch eine andere Lenkeinrichtung denkbar, beispielweise in Form eines Lenkrads.

Die oben angegebene Aufgabe wird ebenfalls gelöst durch ein Flurförderzeug mit den Merkmalen des Anspruchs 12. Das Flurförderzeug weist eine Antriebs- und Lenkeinheit der vorstehend beschriebenen Art auf.

Die Erfindung wird nachfolgend anhand von in Figuren dargestellten Ausführungsbeispielen näher erläutert. Es zeigen:
- Fig. 1: eine Antriebs- und Lenkeinheit eines deichselgeführten Flurförderzeugs ohne Lenkantrieb in einer teilweise geschnittenen Darstellung;
- Fig. 2: eine Antriebs- und Lenkeinheit einer deichselgeführten Flurförderzeugs mit Lenkantrieb in einer teilweise geschnittenen Darstellung;
- Fig. 3: ein Rohteil, aus dem ein erfindungsgemäßes Lagerbauteil hergestellt werden kann, in einer perspektivischen Ansicht und unterhalb davon in einer teilweise geschnittenen Darstellung;
- Fig. 4: ein erfindungsgemäßes Lagerbauteil für ein Flurförderzeug mit Lenkantrieb in einer perspektivischen Ansicht und unterhalb davon in einer teilweise geschnittenen Darstellung;
- Fig. 5: ein weiteres erfindungsgemäßes Lagerbauteil für ein Flurförderzeug ohne Lenkantrieb in einer perspektivischen Ansicht und unterhalb davon in einer teilweise geschnittenen Darstellung;
- Fig.6: ein erfindungsgemäßes Flurförderzeug in einer perspektivischen Darstellung;
- Fig. 7: eine perspektivische Ansicht der Antriebs- und Lenkeinheit des Flurförderzeugs aus Fig. 6;
- Fig. 8: eine Antriebs- und Lenkeinheit eines aus dem Stand der Technik bekannten Flurförderzeugs in einer perspektivischen Darstellung;
- Fig. 9: die Antriebs- und Lenkeinheit aus Fig. 8 in einer teilweise geschnittenen Darstellung.

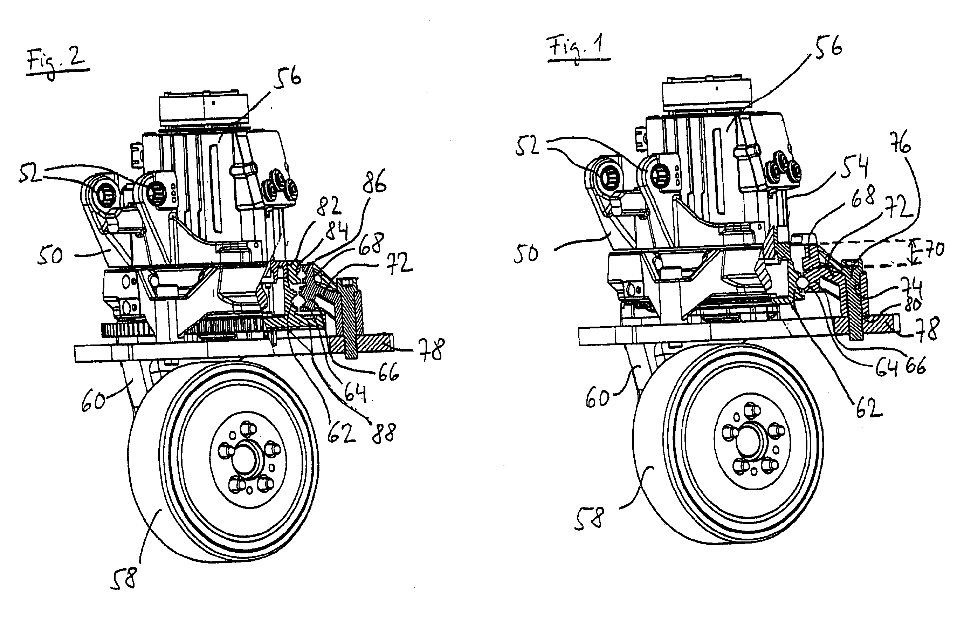

Die Erfindung wird zur besseren Übersicht zunächst anhand der Figuren 1 und 2 erläutert, die zwei unterschiedliche erfindungsgemäße Lagerbauteile im in einem Flurförderzeug montierten Zustand zeigen. Die Antriebs- und Lenkeinheit der Fig. 1 hat keinen Lenkantrieb. Der Deichselbock 50, der zwei Lageraugen 52 zur schwenkbaren Lagerung einer Deichsel aufweist, ist fest mit dem Motorgehäuse 54 des Antriebsmotors 56 verbunden. Der Lenkwinkel des Flurförderzeugs wird durch manuelles Verstellen der Drehstellung der Antriebs- und Lenkeinheit mit Hilfe der Deichsel eingestellt. Der Antriebsmotor 56 treibt über ein Getriebe das einzige Antriebsrad 58 an. Das Antriebsrad 58 ist an einem Bein 60 einseitig horizontal drehbar gelagert.

Ein Teil des Getriebegehäuses bildet einen Innenring 62 mit einem Lagerbett in Form einer Kugellaufbahn. Diese wirkt zusammen mit einem ersten Lagerbett 64, das in Form einer Kugellaufbahn an einem ersten ringförmigen Abschnitt 66 des Lagerbauteils ausgebildet ist.

Das Lagerbauteil weist einen zweiten ringförmigen Abschnitt 68 auf, der konzentrisch zu dem ersten Lagerbett 64 angeordnet ist und sich über eine bei 70 angedeutete Höhe in Richtung der Symmetrieachse des zweiten ringförmigen Abschnitts erstreckt. Dieser zweite ringförmige Abschnitt 68 ist mit einem zweiten Lagerbett zur Aufnahme einer schwenkbar zu lagernden Lenkeinrichtung ausrüstbar.

Das Lagerbauteil weist weiterhin eine Befestigungseinrichtung in Form von radial nach außen und leicht schräg nach unten gerichteten Befestigungsarmen 72 auf, in deren äußeren Enden vertikal angeordnete Befestigungsbohrungen 74 angeordnet sind. Durch jede der Befestigungsbohrungen 74 ist eine Schraube 76 hindurchgeführt, die in einer Rahmenplatte 78 des Flurförderzeugs verschraubt ist. Die an die Rahmenplatte 78 angrenzenden Anlageflächen 80 der Befestigungsarme 72 befinden sich in einem vertikalen Abstand von dem ersten Lagerbett 64, d.h. in einem Abstand in Richtung der Symmetrieachse des ersten Lagerbetts 64. Dadurch verbleibt zwischen der Ebene der Rahmenplatte 78 und dem von dem ersten ringförmigen Abschnitt 66 mit dem ersten Lagerbett 64 und dem Innenring 62 gebildeten Antriebslager ein Freiraum.

Das Ausführungsbeispiel der Fig. 2 verfügt über eine Antriebseinheit, die weitgehend mit derjenigen der Fig. 1 übereinstimmt. Für die sich entsprechenden Komponenten werden die gleichen Bezugszeichen verwendet wie in der Fig. 1. Im Gegensatz zu Fig. 1 weist das Ausführungsbeispiel der Fig. 2 jedoch ein Lenkeinheit auf, die von einem Lenkantrieb betätigt wird. Die Bewegung des Lagerbocks 50 von derjenigen der Antriebseinheit entkoppelt. Zu diesem Zweck ist der Deichselbock 50 mit einem Innenring 82 verbunden, der gegenüber dem Lagerbauteil drehbar gelagert ist. Der Innenring 82 weist ein Lagerbett in Form einer Kugellaufbahn 84 auf. Die Kugellaufbahn 84 wirkt mit einem zweiten Lagerbett 86 in Form einer Kugellaufbahn an dem zweiten ringförmigen Abschnitt 68 des Lagerbauteils zusammen. Das zweite Lagerbett 86 ist durch Fräsen der Kugellaufbahn in den zweiten ringförmigen Abschnitt 68 des Lagerbauteils hergestellt. Im Übrigen gleicht das Lagerbauteil aus Fig. 2 demjenigen aus Fig. 1. Insbesondere weist es ebenfalls ein erstes Lagerbett 64 in Form einer Kugellauffläche in dem ersten ringförmigen Abschnitt 68 auf. Auch die Befestigung des Lagerbauteils mit Hilfe von Befestigungsarmen 72 an einer Rahmenplatte 78 des Flurförderzeugs stimmt mit derjenigen aus Fig. 1 überein.

Ein weiterer Unterschied zu Fig. 1 besteht in der Ausgestaltung des Getriebegehäuses, welches unterhalb des mit dem ersten Lagerbett 64 des Lagerbauteils zusammenwirkenden Lagerbetts 62 ein Zahnrad 88 aufweist, das in dem Freiraum zwischen dem ersten ringförmigen Abschnitt 66 mit dem ersten Lagerbett 64 und der Ebene der Rahmenplatte 78 angeordnet ist. Das Zahnrad 88 steht im Eingriff mit einem Ritzel oder einem weiteren Zahnrad eines nicht angezeigten Lenkantriebs, wodurch ein Verdrehen der gesamten Antriebseinheit um ihre vertikale Achse möglich ist. Das Zahnrad 88 weist einen größeren Durchmesser auf als das erste Lagerbett 64.

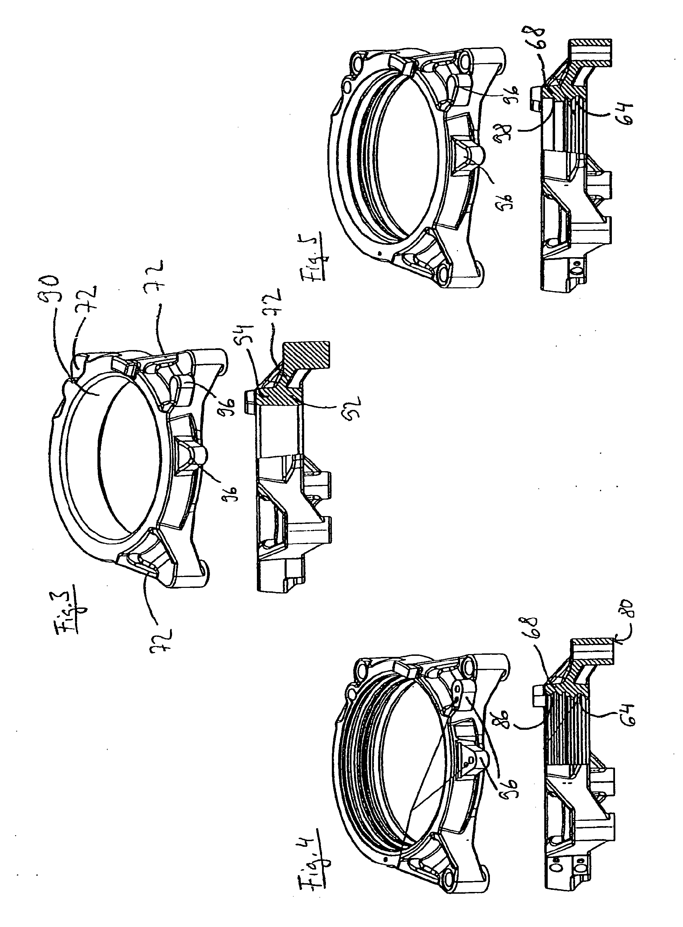

In der Fig. 3 ist ein Rohteil gezeigt, das sowohl für die Herstellung des Lagerbauteils aus Fig. 1 als auch des Lagerbauteils aus Fig. 2 verwendet werden kann. Es weist einen ringförmigen Körper 90 mit einer Befestigungseinrichtung in Form von drei Befestigungsarmen 72 auf. Wie insbesondere die im unteren Teil der Fig. 3 gezeigte, teilweise geschnittene Darstellung zeigt, besteht der ringförmige Körper 90 aus einem ersten ringförmigen Abschnitt 92 und einem zweiten ringförmigen Abschnitt 94, die konzentrisch und in Richtung der Symmetrieachse des ringförmigen Körpers 90 versetzt angeordnet sind. Im unbearbeiteten Zustand des Rohteils, wie in Fig. 3 gezeigt, ist die innere Fläche des ringförmigen Körpers im Wesentlichen zylindrisch bzw. leicht konisch, wobei der erste ringförmige Abschnitt 92 nahtlos in den zweiten ringförmigen Abschnitt 94 übergeht.

Durch weitere Bearbeitungsschritte kann das Rohteil der Fig. 3 sowohl zu dem in Fig. 1 als auch zu dem in Fig. 2 gezeigten Lagerbauteil werden.

Fig. 4 zeigt das in der Fig. 2 in seiner Einbauposition gezeigte Lagerbauteil. Gut erkennbar sind das erste Lagerbett 64 und das zweite Lagerbett 86, die beide in Form von in den ringförmigen Körper 90 gefrästen Kugellaufbahnen ausgebildet sind. Das erste Lagerbett 64 und das zweite Lagerbett 86 sind konzentrisch zueinander und in einem Abstand voneinander übereinander angeordnet. Gut erkennbar ist auch die Anlagefläche 80 der Befestigungseinrichtung, die im Montagezustand in Anlage mit einer Rahmenplatte 78 des Flurförderzeugs gelangt. Die Befestigungsarme 72 erstrecken sich ausgehend von dem ringförmigen Körper 90 radial nach außen und schräg nach unten.

Weiterhin zeigt Fig. 4 zwei Befestigungsansätze 96, die mit Bohrungen zur Befestigung eines Lenkantriebs ausgestattet sind. Wie in Fig. 3 erkennbar, sind diese Befestigungsansätze 96 bereits an dem in dieser Figur gezeigten Rohteil vorhanden.

Fig. 5 zeigt das in der Fig. 1 gezeigte Lagerbauteil, das ebenfalls aus einem Rohteil gemäß Fig. 3 hergestellt werden kann. Es gleicht hinsichtlich des ersten Lagerbetts 64 dem in Fig. 4 gezeigten Lagerbauteil. Davon abweichend ist der zweite ringförmige Abschnitt des ringförmigen Körpers 90 jedoch nicht mit einem zweiten Lagerbett 86 versehen. Stattdessen ist lediglich eine Stufe 98 in den zweiten ringförmigen Abschnitt 68 eingearbeitet. Die Befestigungsabschnitte 96 sind ebenfalls vorhanden, jedoch nicht mit dem in der Fig. 4 gezeigten Bohrungen versehen. Grund hierfür ist, dass das Lagerbauteil der Fig. 5 für ein deichselgeführtes Flurförderzeug ohne Lenkantrieb bestimmt ist, wie in der Fig. 1 illustriert.

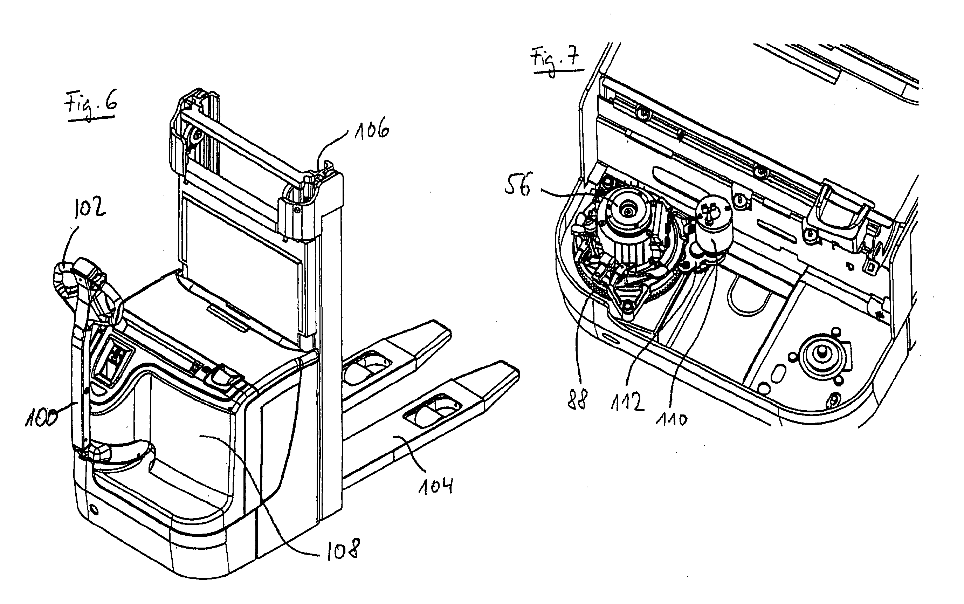

Fig. 6 zeigt ein erfindungsgemäßes Flurförderzeug in einer perspektivischen Ansicht. Es weist eine Deichsel 100 mit einem Multifunktionsgriff 102 auf, der zur Steuerung vieler Funktionen des Flurförderzeugs dient. Weiterhin hat das Flurförderzeug zwei Lasttragmittel 104 und einen Hubmast 106. Die Antriebs- und Lenkeinheit des Flurförderzeugs ist unter Fig. 6 von einer Abdeckung 108 verdeckt.

In der Ausschnittsvergrößerung der Fig. 7 ist diese Abdeckung 108 entfernt, ebenso wie die Deichsel 100. In dieser Ansicht ist die Antriebseinheit mit ihrem Antriebsmotor 56 erkennbar. Ebenfalls erkennbar ist ein Lenkantrieb 110 in Form eines Elektromotors, der über ein weitere Zahnräder umfassendes Getriebe 112 auf ein Zahnrad 88 einwirkt, das fest mit der Antriebseinheit verbunden ist. Die Deichsel 100 des Flurförderzeugs ist an einem entkoppelten Deichselbock 50 gelagert, wie in der Fig. 2 gezeigt.

Die Figuren 8 und 9 zeigen eine Antriebs- und Lenkeinheit nach dem Stand der Technik. Sie wurden bereits in der Beschreibungseinleitung erläutert.

## Patentansprüche

1. Lagerbauteil zur Lagerung einer Antriebs- und Lenkeinheit eines Flurförderzeugs mit
• einem ringförmigen Körper (64,66,68) und
• einer Befestigungseinrichtung (72) zur Befestigung des ringförmigen Körpers (64,66,68) an einem Rahmen (78) des Flurförderzeugs, **dadurch gekennzeichnet dass**:
• das Lagerbauteil einteilig aus einem einzigen Rohteil hergestellt ist
• der ringförmige körper (64,66,68) einem ersten ringförmigen Abschnitt (66) mit einem ersten Lagerbtt (64) zur Aufnahme einer schwenkbar zu lagernden Antriebseinheit (56) und
• einen zweiten ringförmigen Abschnitt (68) aufweist, der sich über eine Höhe in Richtung seiner Symmetrieachse erstreckt und ein zweites Lagerbett (86) zur Aufnahme einer schwenkbar zu lagernden Lenkeinrichtung aufweist oder mit einem solchen ausrüstbar ist.

2. Lagerbauteil nach Anspruch 1, **dadurch gekennzeichnet, dass** die Befestigungseinrichtung mindestens eine Anlagefläche (80) aufweist, die in der vorgesehenen Einbauposition des Lagerbauteils an einem rahmenfesten Element (78) des Flurförderzeus anliegt und in einem in Richtung der Symmetrieachse des ersten Lagerbetts (64) verlaufenden Abstand von dem ersten Lagerbett angeordnet ist.

3. Lagerbauteil nach Anspruch 1 oder 2, **dadurch gekennzeichnet, dass** der erste ringförmige Abschnitt (66) und der zweite ringförmige Abschnitt (68) in Richtung der Symmetrieachse des ersten ringförmigen Abschnitts (66) versetzt angeordnet sind.

4. Lagerbauteil nach einem der Ansprüche 1 bis 3, **dadurch gekennzeichnet, dass** das erste Lagerbett (64) eine Gleitfläche oder eine Lauffläche für. Wälzkörper zur Lagerung der Antriebseinheit (56) und/oder das zweite Lagerbett (86) eine Gleitfläche oder eine Lauffläche für Wälzkörper zur Lagerung der Lenkeinrichtung aufweist.

5. Lagerbauteil nach einem der Ansprüche 1 bis 4, **dadurch gekennzeichnet, dass** das erste Lagerbett (64) und/oder das zweite Lagerbett (86) eine Aufnahme für einen Laufring aufweist.

6. Lagerbauteil nach einem der Ansprüche 1 bis 5, **dadurch gekennzeichnet, dass** das erste Lagerbett (64) und/oder das zweite Lagerbett (86) jeweils einen Außenring des zugehörigen Lagers bilden oder aufnehmen.

7. Lagerbauteil nach einem der ansprüche 1 bis 6, **dadurch gekennzeichnet, dass** es eine Befestigungseinrichtung (96) für einen Lenkantrieb aufweist.

8. Lagerbauteil nach einem der Ansprüche 1 bis 7, **dadurch gekennzeichnet, dass** der zweite ringförmige Abschnitt (68) konzentrisch zu dem ersten Lagerbett (64) der zweite ringförmige Abschnitt (68) konzentrisch zu dem ersten Lagerbett (64) angeordnet ist.

9. Antriebs- und enkeinheit für ein Flurförderzeug mit einer Antriebseinheit, die ein Antriebsrad (58) und einen Antriebsmotor (56) umfasst, und einem Lagerbauteil nach einem der Ansprüche 1 bis 8, wobei die Antriebseinheit ein Lagerbett (62) aufweist, das mit dem ersten Lagerbett (64) des Lagerbauteils zusarmnenwirkt.

10. Antriebs- und Lenkeinheit nach Anspruch 9, **dadurch gekennzeichnet, dass** eine Lenkeinrichtung vorhanden ist, mit der die Antriebseinheit schwenkbar ist, und die ein Lagerbett (82) aufweist, das mit dem zweiten Lagerbett (86) des Lagerbauteils zusammenwirkt.

11. Antriebs- und Lenkeinheit nach Anspruch 10, **dadurch gekennzeichnet, dass** ein Lenkantrieb vorhanden ist, der auf die Antriebseinheit wirkt und die Drehstellung der Antriebseinheit nach Maßgabe der Drehstellung der Lenkeinrichtung steuert.

12. Flurförderzeug mit einer Antriebs- und Lenkeinheit nach einem der Ansprüche 9 bis 11.

## Claims

1. A bearing component for bearing mounting a drive- and steering unit of an industrial truck, with
• an annular body and
• a fastening device for fastening the annular body on a frame of an industrial truck, wherein
• the bearing component is made in one piece from one single unmachined part,
• the annular body has a first annular portion with a first support bed for accommodating a drive unit that is to be mounted pivotally, and
• has a second annular portion, which extends across a height in the direction of its symmetry axis and has a second support bed for accommodating a steering device that is to be mounted pivotally, or can be equipped with such a support bed.

2. The bearing component according to claim 1, **characterised in that** the fastening device has at least one bearing surface, which bears against a frame-fixed element of the industrial truck in the envisioned fitting position of the bearing component, and is disposed in a distance from the first support bed running in the direction of the symmetry axis of the first support bed.

3. A bearing component according to claim 1 or 2, **characterised in that** the first annular portion and the second annular portion are disposed out of line in the direction of the symmetry axis of the first annular portion.

4. A bearing component according to any one of claims 1 to 3, **characterised in that** the first support bed has a sliding surface or a running surface for rolling bodies for bearing mounting the drive unit, and /or the second support bed has a sliding surface or a running surface for rolling bodies for bearing mounting the steering device.

5. A bearing component according to any one of claims 1 to 4, **characterised in that** the first support bed and/or the second support bed has an accommodation for a ball race.

6. A bearing component according to any one of claims 1 to 5, **characterised in that** the first support bed and/or the second support bed each form or accommodate an outer ring of the associated bearing.

7. A bearing component according to any one of claims 1 to 6, **characterised in that** it has a fastening device for a steering drive.

8. A bearing component according to any one of claims 1 to 7, **characterised in that** the second annular portion is disposed concentrically to the first support bed.

9. Drive- and steering unit for an industrial truck with a drive unit which comprises a driven wheel and a drive motor, and with a bearing component according to any one of claims 1 to 8, wherein the drive unit has a support bed which co-operates with the first support bed of the bearing component.

10. The drive- and steering unit according to claim 9, **characterised in that** a steering device exists by which the drive unit can be swung and which has a support bed which co-operates with the second support bed of the bearing component.

11. The drive- and steering unit according to claim 10, **characterised in that** a steering drive exists which acts on the drive unit and controls the rotational position of the drive unit in accordance with the rotational position of the steering device.

12. An industrial truck with a drive- and steering unit according to any one of claims 9 to 11.

## Revendications

1. Composant de palier pour loger une unité de traction et de commande de direction d'un chariot de manutention, avec
• un corps annulaire et
• un dispositif de fixation pour fixer le corps annulaire sur un cadre du chariot de manutention, dans lequel
• le composant de palier est fait en une seule pièce d'une seule ébauche,
• le corps annulaire a une première partie annulaire avec un premier lit de support pour recevoir une unité de traction qu'on veut loger de façon pivotante, et
• il a une deuxième partie annulaire, qui s'étend à travers une hauteur dans la direction de son axe de symétrie, et a un deuxième lit de support pour recevoir un dispositif de commande de direction qu'on veut loger de façon pivotante, ou peut être équipé d'un tel lit de support.

2. Composant de palier selon la revendication 1, **caractérisé en ce que** l'dispositif de fixation a au moins une surface d'appui, qui s'appuie sur un élément fixé au cadre du chariot de manutention dans la position d'assemblage du composant de palier envisagée et qui est disposée en un écart du premier lit de support passant dans la direction de l'axe de symétrie du premier lit de support.

3. Composant de palier selon la revendication 1 ou 2, **caractérisé en ce que** la première partie annulaire et la deuxième partie annulaire sont disposées en désaxage de la direction de l'axe de symétrie de la première partie annulaire.

4. Composant de palier selon l'une quelconque des revendications 1 à 3, **caractérisé en ce que** le premier lit de support a une surface de glissement ou une surface de roulement pour des corps de roulement pour loger l'unité de traction, et /ou le deuxième lit de support a une surface de glissement ou une surface de roulement pour des corps de roulement pour loger le dispositif de commande de direction.

5. Composant de palier selon l'une quelconque des revendications 1 à 4, **caractérisé en ce que** le premier lit de support et/ou le deuxième lit de support a un logement pour un chemin de roulement à billes..

6. Composant de palier selon l'une quelconque des revendications 1 à 5, **caractérisé en ce que** le premier lit de support et/ou le deuxième lit de support chacun forment ou recevoient une bague extérieure du palier associé.

7. Composant de palier selon l'une quelconque des revendications 1 à 6, **caractérisé en ce que** il a un dispositif de fixation pour un entraînement de commande de direction..

8. Composant de palier selon l'une quelconque des revendications 1 à 7, **caractérisé en ce que** la deuxième partie annulaire est disposée de façon concentrique par rapport au premier lit de support.

9. Unité de traction et de commande de direction pour un chariot de manutention avec une unité de traction qui comporte une roue motrice et un moteur de traction, et avec un composant de palier selon l'une quelconque des revendications 1 à 8, dans laquelle l'unité de traction a un lit de support qui coopère avec le premier lit de support du composant de palier.

10. Unité de traction et de commande de direction selon la revendication 9, **caractérisé en ce que** un dispositif de commande de direction existe par lequel l'unité de traction peut être pivotée et qui a un lit de support qui coopère avec le deuxième lit de support du composant de palier..

11. Unité de traction et de commande de direction selon la revendication 10, **caractérisé en ce que** un entraînement de commande de direction existe qui agît sur l'unité de traction et qui contrôle la position de rotation de l'unité de traction conformément à la position de rotation du dispositif de commande de direction.

12. Chariot de manutention avec une unité de traction et de commande de direction selon l'une quelconque des revendications 9 à 11.
